(19) Europäisches Patentamt
European Patent Office
Office européen des brevets

(11) **EP 1 791 364 B1**

(12) **EUROPÄISCHE PATENTSCHRIFT**

(45) Veröffentlichungstag und Bekanntmachung des Hinweises auf die Patenterteilung:
**14.01.2009 Patentblatt 2009/03**

(51) Int Cl.:
*H04N 7/18* (2006.01)   *G08B 15/00* (2006.01)
*G08G 5/00* (2006.01)

(21) Anmeldenummer: **06021305.5**

(22) Anmeldetag: **11.10.2006**

(54) **Flugverkehr-Leiteinrichtung**

Air traffic guidance device

Dispositif de gestion du trafic aérien

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **23.11.2005 DE 102005055879**

(43) Veröffentlichungstag der Anmeldung:
**30.05.2007 Patentblatt 2007/22**

(73) Patentinhaber: **Deutsches Zentrum für Luft- und Raumfahrt e.V.**
**51147 Köln (DE)**

(72) Erfinder:
• **Fürstenau, Norbert, Dr.**
**38104 Braunschweig (DE)**
• **Hetzheim, Hartwig, Dr.**
**12439 Berlin (DE)**
• **Halle, Winfried, Dr.**
**12163 Berlin (DE)**

• **Rudolph, Michael**
**38114 Braunschweig (DE)**
• **Schmidt, Markus**
**31141 Hildesheim (DE)**
• **Werther, Bernd**
**38100 Braunschweig (DE)**
• **Tuscheerer, Wolfram**
**12683 Berlin (DE)**

(74) Vertreter: **Gerstein, Hans Joachim et al**
**Gramm, Lins & Partner GbR**
**Freundallee 13a**
**30173 Hannover (DE)**

(56) Entgegenhaltungen:
**EP-A- 0 714 081**

• **FÜRSTENAU, RUDOLPH, SCHMIDT UND WERTHER: "Virtual Tower" WETTBEWERB DER VISIONEN, 2004, Seiten 16-21, XP002421630**

**Beschreibung**

Die Erfindung betrifft eine Flugverkehr-Leiteinrichtung zur Kontrolle und Steuerung des Flugverkehrs im Flughafenbereich mit einer Mehrzahl von auf zugeordnete Bereiche des Flughafens ausrichtbare Beobachtungskameras, mit einer Videoprojektionseinrichtung in einer Leitzentrale zur Darstellung von mit den Beobachtungskameras erfassten Informationen als Videopanorama und mit einer Bildauswerteeinheit zur automatischen Erkennung von Objekten und Extraktion von den Flugverkehr betreffenden objekt- und positionsbezogenen Verkehrsparametern aus den mit den Beobachtungskameras aufgenommenen Bilddaten.

In herkömmlichen Flughäfen sind Flugverkehr-Leiteinrichtungen integriert, die von Lotsen in Turmbauwerken, sogenannten Towern betrieben werden. Durch die erhöhte Position im Tower haben die Lotsen eine vorzugsweise Rundumsicht auf das zu überwachende Flughafengebiet. Ggf. sind auch noch weitere örtlich verteilte und miteinander vernetzte Leitstände im Flughafenbereich vorgesehen, die auf Außensicht hin gestaltet sind. Dies betrifft beispielsweise die Vorfeldüberwachung.

Ein Problem der Verkehrsleitzentralen der Flugsicherung ist, dass die Arbeitsbedingungen vom Lotsen neben der Kommunikation per Funk und Telefon einen häufigen Wechsel der Aufmerksamkeit zwischen Außensicht und verschiedenen Monitoren und Radardisplays fordern. Hin und wieder ist auch die Benutzung eines Fernglases notwendig. Bei schlechter Sicht reduziert sich die Möglichkeit der visuellen Verkehrsüberwachung durch Blick aus den Fenstern der Leitzentralen naturgemäß deutlich und der Verkehr muss aus Sicherheitsgründen entsprechend reduziert werden.

Aus Norbert Fürstenau, Michael Rudolph, Markus Schmidt, Bernd Werther: "Virtual Tower", in: DLR-Sonderheft: Wettbewerb der Visionen, 2004, Seiten 16 bis 21 ist eine sensorbasierte Leitzentrale zur Kontrolle des Flugverkehrs im Flughafenbereich ohne direkte Außensicht beschrieben. Durch hochauflösende Video-Projektionstechnologien, multimodale Mensch-Maschine-Interaktion und Zusammenführung von Daten aus unterschiedlichen Informationsquellen soll die Wetterabhängigkeit der Verkehrslenkung reduziert, das Situationsbewusstsein der Lotsen verbessert und dadurch sowohl die Verkehrskapazität erhöht, als auch ein Sicherheitszuwachs erzielt werden. Zudem soll eine Fernüberwachung kleiner Flughäfen ohne eigene Leitzentrale ermöglicht werden. Hierzu wird ein Netzwerk von hochempfindlichen Videokameras mit hoher Dynamik und Auflösung genutzt, die auf den Flughafenbereich ausgerichtet sind. Diese Videoinformationen werden durch Infrarotkameraaufnahmen, hochauflösendes Bodenradar sowie Geländedatenbanken und Flugplandaten ergänzt, wobei sämtliche Informationen über eine Datenfusion verschmolzen und auf einer geeigneter Projektionsfläche dargestellt werden. Auch ein Zoom in gewünschte Flughafenbereiche sowie eine Betrachtung des Flughafenbereichs in der Vogelperspektive soll möglich sein.

Zur Überlagerung von synthetisch generierten Verkehrsparametern, wie Flugzeugnummern, Wetterdaten etc. auf die Außensicht wird zudem eine transparente holografische Projektionsscheibe beschrieben, die zwischen das Sichtfeld des Lotsen und der Außenumgebung des Flughafens vor die Fensterscheiben des Towers gestellt wird. Auf die Projektionsscheibe werden die synthetisch generierten Verkehrsparameter entsprechend ortsbezogen auf die zugeordneten visuell erfassbaren Objekte im Flughafenbereich projiziert.

Auch in Norbert Fürstenau: "Perspectives of Virtual Reality for Integration", in: Proceedings 12th Scientific Seminar DLR, Institute of Flight Guidance, October 2002, DLR-Mitteilung 03-2003 ist ebenfalls bereits die Kamerabeobachtung des Flugfeldes und Fusion von Bilddaten, Flugdaten, Wetterdaten und Bodenverkehrsinformationen sowie Projektion der realen Ansicht beschrieben. Die Ortspositionen der landenden / startenden und rollenden Flugzeuge und der Fahrzeuge am Boden sollen zum Beispiel mit Satellitenortungsempfängern bestimmt und zur Videoprojektion weiter genutzt werden.

Unter Echtzeitbedingungen werden die Bilddaten parallel zur Datenkompression für das Videopanorama einer Auswerteeinheit zur Objekterkennung und Extraktion von objekt- und positionsbezogenen Verkehrsparametern und anschließenden Erstellung eines dreidimensionalen texturierten Oberflächenmodells zugeführt.

Bei den beschriebenen Entwicklungsarbeiten von verbesserten Flugverkehrleiteinrichtungen hat sich die erforderliche Echtzeitverarbeitung in Verbindung mit der Datenübertragung von den Kameras im Flughafenbereich zu der entfernt davon angeordneten Leitzentrale als problematisch herausgestellt.

Aufgabe der Erfindung ist es daher, eine verbesserte Flugverkehr-Leiteinrichtung zu schaffen, mit der eine Bildauswertung in Echtzeit mit hinreichender Zuverlässigkeit möglich ist und bei der gleichzeitig die Datenübertragungsrate für eine hochauflösende Videoprojektion optimiert ist.

Die Aufgabe wird mit der Flugverkehr-Leiteinrichtung der eingangs genannten Art gelöst durch:

- mindestens eine Videokompressionseinheit zur Komprimierung der von den Beobachtungskameras aufgenommenen Bilddaten, um eine handhabbare Datenübertragungsrate zu gewährleisten

- mindestens einen Signalteiler, der zwischen die Beobachtungskameras und die mindestens eine Videokompressionseinheit und die Bildauswerteeinheit geschaltet ist, um Verkehrsparameter aus den unkomprimierten Bilddaten zu extrahieren und die Bilddaten annähernd gleichzeitig zu komprimieren, und

- eine Datenübertragungsleitung zwischen der entfernt von der Bildauswerteeinheit und der Videokompressionseinheit angeordneten Videoprojektionseinrichtung und der Bildauswerte- und Videokompressionseinheit, um die komprimierten Bilddaten und die extrahierten Verkehrsparameter zur Videoprojektionseinrichtung zu übertragen.

Durch die Bildsignalteilung und parallele Komprimierung und Bildauswertung wird erreicht, dass die Bildauswertung anhand der nicht qualitätsverminderten Kamerabilddaten erfolgen kann. Die Echtzeitverarbeitung wird durch die parallele Bilddatenkomprimierung beispielsweise nach dem MPEG-Standard und Übertragung der komprimierten Bilddaten mit der Datenübertragungsleitung zu der entfernten Leitzentrale erreicht. Hierbei können die nach der Übertragung dekomprimierten Bilddaten mit den extrahierten Verkehrsparametern wieder fusioniert werden. Ein Zeitversatz zwischen den dekomprimierten Bilddaten und den extrahierten Verkehrsparametern aufgrund von unterschiedlichen rechnerbedingten Latenzzeiten kann bei dieser durch Informationsüberlagerung verstärkten Videosicht, im Gegensatz zur Informationsüberlagerung über die reale Außensicht mittels semitransparenter Displays, kompensiert werden.

Die Videoprojektionseinrichtung hat vorzugsweise Datenspeicher zur Speicherung von Grafikinformationen statischer Merkmale des Flughafenbereichs und/oder von Verkehrsdaten und ist zur Einblendung ausgewählter Grafikinformationen in das mit der Videoprojektionseinrichtung generierte Videopanorama mit Bilddaten und zugeordneten Verkehrsparametern eingerichtet.

Dies hat den Vorteil, dass auch bei schlechter Sicht oder bei Nacht wesentliche Objekte oder Einrichtungen des Flughafenbereichs in das Videopanorama eingeblendet werden können, wie z. B. Runway-Begrenzungslinien und Flughafengebäude, deren Positionen unverändert fest stehen und die einmalig als computergerechte 2D- oder 3D-Grafik abgespeichert und angezeigt werden. Aus Flugverkehrsdaten können beispielsweise Flugzeugtyp und Flugzeugnummern den mit der Bildauswerteeinheit automatisch erkannten Luftfahrzeugen zugeordnet werden. Weiterhin können mit Infrarot-Wärmebildkameras gewonnene Aufnahmen an den entsprechenden Orten des Panoramas integriert werden.

Die Bildauswerteeinheit ist vorzugsweise zur Bestimmung der Ortsposition von Verkehrsparametern in Abhängigkeit von der jeweiligen Bildpixelposition in den als Bildpixelmatrix aufgenommenen Bildern und in Abhängigkeit von der Ausrichtung der Beobachtungskamera eingerichtet. Durch die Bildpixelposition der erkannten Objekte besteht bereits ein Positionsbezug der erkannten Objekte zu dem entsprechenden von einer spezifischen Beobachtungskamera aufgenommenen Bild. Damit ist bereits eine Positionszuordnung bei der späteren Fusion der zu den erkannten Objekten zugehörigen Verkehrsparameter zu einer Anzeigeposition im Videopanorama des zugeordneten Bildes möglich. Durch die Kenntnis der Ausrichtung der Beobachtungskamera ggf. in Verbindung mit der Brennweite kann auf eine absolute Ortsposition geschlossen werden, so dass eine weitergehende Fusion mit weiteren Daten, wie beispielsweise Bodenradardaten, Anflugradardaten etc. und Bilddaten weiterer Beobachtungskameras möglich ist.

Im gleichen Maßstab wie die rekonstruierte Panoramadarstellung kann bei einer hochauflösenden Großprojektion parallel dazu eine Draufsicht auf den Flughafenbereich und Darstellung positionsbezogenen Verkehrsparametern durch Umrechnung der Ortsposition der Verkehrsparameter auf das Koordinatensystem der Draufsicht dargestellt werden. Damit ist eine noch übersichtlichere Darstellung des Flughafenbereichs möglich.

Die Flugverkehr-Leiteinrichtung hat in einer vorteilhaften Ausführungsform eine Datenfunkempfangseinheit zum Empfangen von Positionsdaten der in Luftfahrzeugen selbst bestimmten Ortspositionen der Luftfahrzeuge. Dabei ist die Flugverkehr-Leiteinrichtung zur Zuordnung der empfangenen Ortspositionen zu den zugehörigen Verkehrsparametern eingerichtet. Die Ortspositionen können beispielsweise mit Satellitennavigationssystemen, wie dem Global Positioning System GPS oder dem geplanten europäischen System GALILEO zusammen mit dem SBAS Systemen (Satellite Based Augmentation Systems) WAAS/EGNOS (Wide Area Augmentation System und European Geostationary Navigation Overlay Service) erfolgen. Die GPS-Datenübertragung Bord-Boden erfolgt mit dem weltweit im Aufbau befindlichen System ADS-B (=Automatic Dependent Surveillance-Broadcast). Dies hat den Vorteil, dass keine kostspieligen Bodenradar- oder Multilaterationsysteme zur Darstellung der Bodenlage erforderlich sind und die Ortsposition dennoch mit hinreichender Genauigkeit bestimmt werden kann. Mindestens eine der Beobachtungskameras sollte eine von der Leitzentrale fernsteuerbare Zoomkamera mit Schwenkeinrichtung sein, um den Beobachtungsbereich und die Bildvergrößerung wahlweise zu verändern. Vorteilhaft ist es dabei, wenn die Flugverkehr-Leiteinrichtung zur automatischen Nachführung der Zoomkamera in Abhängigkeit der Ortsposition auswählbarer Verkehrsparameter durch Ansteuerung der Schwenkeinrichtung eingerichtet ist. Die Zoomkamera übernimmt dadurch die Funktion des herkömmlichen Fernglases und ist mit der automatischen Nachführung noch besser handhabbar.

Die anderen Beobachtungskameras können fest auf vorgegebene Bereiche des Flughafenbereiches ausgerichtet sein. Es kann aber auch mindestens eine mit einer Schwenkeinrichtung verschwenkbare Zeilenkamera als Beobachtungskamera zur Aufnahme annähernd statischer Bildinformationen vorgesehen und so ansteuerbar sein, dass in aufeinander folgenden Zeitintervallen Bilddaten unterschiedlicher Flughafenbereiche mit Bezug auf die jeweilige Schwenkposition der Beobachtungskamera aufgenommen werden. Die Flughafenbereiche werden damit abgescannt, so dass zu einem Zeitpunkt nicht alle Bereiche des Flughafens gleichzeitig aufgenommen werden. Bereiche, in denen zeitkritische Veränderungen auftreten, können optional mit einer separaten hierauf ausgerichteten Beobachtungskamera überwacht werden.

Hilfreich ist es, wenn die Videoprojektionseinheit zur Einblendung vergrößerter Darstellungen von Objekten in das generierte Videopanorama mit aufgenommenen Bilddaten und zugeordneten Verkehrsparametern eingerichtet ist. Die örtliche Zuordnung der vergrößert dargestellten Objekte zu der generierten Darstellung erfolgt dann mit Hilfe einer Positionsbestimmung durch die Bildauswerteeinheit und/oder mit Hilfe von an die Flugverkehr-Leiteinrichtung von Luftfahrzeugen übertragenen Ortspositionen der Luftfahrzeuge und / oder durch Nutzung der Positionsdaten eines Multilaterationssystems. Auf Grund der positionsbezogenen Extraktion der Verkehrsparameter ist auch die vergrößerte Darstellung von Ausschnitten der Videoprojektion problemlos möglich.

Die Videoprojektionseinrichtung ist vorzugsweise zur kohärenten Überlagerung des Videopanoramas mit Geländedaten des Flughafens, insbesondere mit Rollwegkonturen der Rollwege des Flughafens, mit Flugverkehrsdaten, Anflugradardaten und/oder Wetterdaten eingerichtet. Damit werden nicht nur die extrahierten Verkehrsparameter den Bildinformationen in dem Videopanorama überlagert, sondern es können zusätzlich optional auswählbare Informationen aus anderen Datenquellen eingeblendet werden.

Um die Aufmerksamkeit der Lotsen auf relevante Informationen zu konzentrieren, ist das Projektionssystem vorzugsweise zum automatischen Ein- und Ausblenden von Bilddaten und Verkehrsparametern in dem Videopanorama in Abhängigkeit von mindestens der Bewegung und Textur erkannter Objekte eingerichtet. Hierbei werden vorzugsweise in der Bildauswerteeinheit verkehrsrelevante Informationen extrahiert, wie beispielsweise einen Flughafen anfliegende Luftfahrzeuge, Aufsetzpunkte eines landenden Flugzeugs, startende Flugzeuge etc.. Andere Objektbewegungen, wie Wolken, aufsteigender Rauch etc., die das Flugsicherungspersonal nur ablenken können werden hingegen ausgeblendet. Auch Vogelschwärme oder einzelne größere Vögel werden angezeigt und ggf. hervorgehoben, um ggf. Schäden an den Triebwerken vorzubeugen. Es bietet sich daher an, das Einblenden (einschließlich Hervorheben) von Bilddaten und Verkehrsparametern auf den Umgebungsbereich von als sicherheitskritisch erkannten Objekten zu konzentrieren. Die Erkennung solcher Objekte erfolgt dann in zwei Stufen, wobei zunächst die Bewegung der Objekte analysiert und bei Überschreiten vorgegebener Geschwindigkeiten oder bei vorgegebenen Bewegungsmustern die Textur dieser Objekte näher betrachtet werden. Aus der Textur, das heißt der Oberfläche der Objekte kann dann auf den Objekttyp geschlossen und in Verbindung mit dem Bewegungsmuster abgeleitet werden, ob das Flugsicherheitspersonal auf diese Objekte und Situationen in der Umgebung der Objekte, wie beispielsweise Wirbelschleppen hinter Flugzeugen aufmerksam gemacht werden sollte.

Im Unterschied zum herkömmlichen Radarbild, bei der Flugzeuge lediglich als Punkte dargestellt werden, wird bei der vorliegenden Aufmerksamkeitssteuerung eine direkte Bilddarstellung in Grau- oder Farbwerten genutzt. Anstelle der Punktdarstellung des Objektes wird das reale Objekt visualisiert.

Vorliegend erfolgt vorzugsweise eine Aufmerksamkeitssteuerung durch signifikante Hervorhebung der erkannten Ereignisse durch z. B. Einfärbung der jeweiligen Bereiche. Eine Helligkeitssteuerung des Hintergrunds kann dabei kontrastunterstützend sein.

Die Bildauswerteeinheit ist vorzugsweise zur Extraktion von Objekttypen, Objektzuständen, Objektpositionen und/oder Objektgeschwindigkeiten als Verkehrsparameter durch Echtzeit-Bild-Verarbeitungsverfahren eingerichtet. Derartige Echtzeit-Bildverarbeitungsverfahren zur Extraktion von Objekten, d. h. zur Merkmalsextraktion sind an sich hinreichend bekannt.

Bevorzugt hat die Flugverkehr-Leiteinrichtung Zwischenspeicher für Bilddaten und Verkehrsparameter. Die Videoprojektionseinheit ist dann zum selektiven, zeitversetzten Darstellen von im Zwischenspeicher abgelegten Sequenzen von Bilddaten und/oder Verkehrsparametern eingerichtet, während die aktuellen Bilddaten und Verkehrsparameter in dem Zwischenspeicher gepuffert werden.

Aufgrund der Rechnerstruktur zur Bildaufnahme und Bildverarbeitung, kann eine permanente Speicherung der Bild- und Informationsdaten gewährleistet werden. Damit ist es möglich, beliebige Sequenzen aufzurufen und erneut abspielen zu lassen (Replay), während im Hintergrund für die Zeit der selektiven zeitversetzten Wiedergabe (Replay) die Echtzeit-Bildaufnahme weiterläuft.

Zurück in das Livebild ist beispielsweise ein Zeitraffer-Modus denkbar, der gewährleistet, dass dem Lotsen keine Bildinformationen vorenthalten werden. Hierzu ist die Videoprojektionseinheit zur Darstellung der im Zwischenspeicher abgelegten Sequenzen von Bilddaten und/oder Verkehrsparametern im Zeitraffer eingerichtet. Alternativ kann aber auch ein Sprungmodus vorgesehen sein, der den Lotsen direkt zum Livebild führt.

Die Erfindung wird nachfolgend anhand eines Ausführungsbeispiels mit den beigefügten Zeichnungen näher erläutert. Es zeigen:

Figur 1 - schematisches Blockdiagramm einer erfindungsgemäßen Flugverkehr-Leiteinrichtung zur Kontrolle und Steuerung des Flugverkehrs im Flughafenbereich;

Figur 2 - Blockdiagramm eines Netzwerks von Beobachtungskameras mit daran angeschlossenen parallelen Bildauswerte- und Videokompressionseinheiten und nachfolgender Schnittstelle zum Anschluss einer Datenübertragungsleitung;

Figur 3 - Skizze eines Videopanoramas mit einer Panoramasicht von Bildinformationen und Verkehrsparametern im oberen Bereich und einer Draufsicht mit Flugzeugpositionen und Flugdaten im unteren Bereich; und

Figur 4 - Skizze eines Videopanoramas mit kohärent integrierten Videobilddaten aus den Beobachtungskameras in Panoramasicht im oberen Bereich und Draufsicht im unteren Bereich.

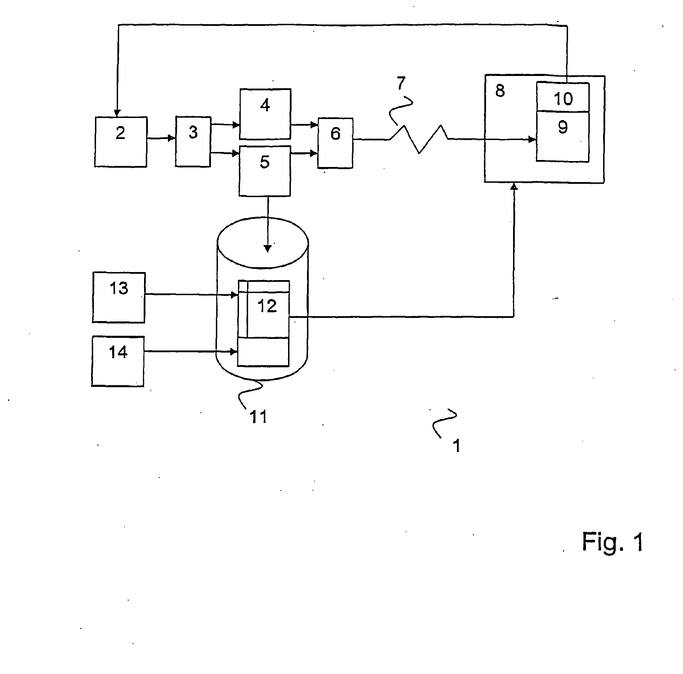

Die Figur 1 lässt ein Blockdiagramm der Flugverkehr-Leiteinrichtung 1 erkennen, die als Ersatz der Außensicht eines herkömmlichen Towers dienen kann. Hierzu ist ein Netzwerk aus Beobachtungskameras 2 vorgesehen, die erhöht am Flughafenrand angeordnet sind und insgesamt vorzugsweise einen Sichtwinkel von typischerweise 180° abdecken. Die primären Videoinformationen werden somit durch das hoch auflösende System vom Panorama-Beobachtungskameras (1200 x 1600 Pixel) mit hohem Dynamikbereich (z. B. 14 Bit pro Pixel) und eine ergänzende Zoomkamera sowie ggf. einzelne verteilte Video- und Infrarotkameras erzeugt. Die Beobachtungskameras sind dabei in Towerposition, typischerweise in einer Höhe von 20 bis 30 m angeordnet und jeweils über eine schnelle Videoverbindung und einen Signalteiler 3 mit einer Videokompressionseinheit 4 und parallel hierzu mit einer Bildauswerteeinheit 5 verbunden. Diese sind als parallel arbeitende Rechnersysteme implementiert. Durch die Datenkompression der Bilddaten mit der Videokompressionseinheit 4 beispielsweise nach dem MPEG-Standard wird die Datenrate reduziert. In der parallelen Bildauswerteeinheit 5 findet für jede Beobachtungskamera mittels Bildverarbeitungsalgorithmen eine Echtzeit-Objekterkennung und Parameterbestimmung statt. Objektparameter sind insbesondere Objekttyp (Flugzeug, Flugzeugtyp, Fahrzeug, Menschen, Tiere, Hindernisse auf den Rollwegen), Objektzustand (Schäden, ausgefahrenes Fahrwerk bei der Landung, Rauch) Objektparameter (Position, Geschwindigkeit). Diese und weitere in an sich bekannter Weise aus den Bilddaten extrahierten Merkmale werden nachfolgend Verkehrsparameter genannt. Die Verkehrsparameter werden objekt- und positionsbezogen erfasst, so dass eine spätere Zuordnung zu Objekten und Positionen in einem Videopanorama möglich ist. Damit bei der Echtzeit-Bildverarbeitung keine unakzeptablen Latenzzeiten im Vergleich zur Live-Videoübertragung auftreten, sollte die Prozessierung der Bilddaten mittels frei programmierbaren Logikbausteinen (FPGA's) durchgeführt werden. Die komprimierten Bilddatenströme und Verkehrsparameter werden in einer Datenübertragungsschnittstelle 6 wieder zusammengeführt, die als elektrooptischer Schalter ausgeführt sein kann, der die Bilddatenströme und die Verkehrsparameter in ein optisches Signal umsetzt. Dieses wird dann in ein glasfaserbasiertes Gbit-Ethernet Kabel 7 eingespeist und zu einer entfernt angeordneten Leitzentrale 8 übertragen. Hiermit sind große Strecken ohne Zwischenverstärker überbrückbar.

Die Leitzentrale hat eine Videoprojektionseinrichtung, um die komprimierten Bilddatenströme nach entsprechender Dekomprimierung als Videopanorama zusammen mit ausgewählten zugeordneten Verkehrsparametern anzuzeigen. Dies erfolgt mit einer hoch auflösenden Weitwinkelprojektion des Videopanoramas mit integrierten Zoomdarstellungen, Flugdaten, Objektinformationen und Verkehrsparametern aus der Bildverarbeitung sowie ggf. Konturen der Verkehrsflächen. Die Zoomdarstellung und die Flugdaten können ggf. nachverfolgt (getrackt), d. h. an die sich bewegenden Objekte angehängt werden. Parallel zum Videopanorama kann auch eine schematische Draufsicht mit Objektpositionen dargestellt werden.

Die Videoprojektionseinrichtung 9 ist zur Bediener-System-Interaktion vorgesehen. Mit Hilfe einer Fernsteuerung 10 können einzelne Beobachtungskameras 2, insbesondere eine Zoomkamera ferngesteuert werden, um den Beobachtungswinkel mit Hilfe einer Schwenkeinrichtung und ggf. den Bildfokus und die Bildvergrößerung (Zoom) zu verändern.

Die Flugverkehr-Leiteinrichtung 1 hat einen Datenspeicher 11 mit einem Speicherbereich, in den die von der Bildauswerteeinheit 5 extrahierten Verkehrsparameter abgelegt werden. Weiterhin können in dem Datenspeicher 11 statische Merkmale des Flughafenbereichs, wie z. B. Konturen der Bewegungsflächen, Flug (Plan-) Daten, Flug (zeug-) Daten, Wetterdaten, Sensordaten etc. abgespeichert sein. Die Sensordaten können beispielsweise von einem Anflugradar, Multiradartracker, Bodenverkehrsüberwachungssystemen (Advanced Surface Movement and Ground Control Systems ASMGCS) etc. abgelegt werden. Hierzu ist der Datenspeicher an externe Radar-Sensorsysteme 13 mit Datenfusionseinrichtung angeschlossen.

Weiterhin ist eine Datenfunkempfangseinheit 14 vorgesehen, um Satellitennavigationssignale von Luftfahrzeugen zu empfangen und diese objektbezogen als Objektposition und ggf. Geschwindigkeiten in der Datenbank 11 abzulegen.

Die Leitzentrale 8 hat Zugriff auf diese Datenbank, um hieraus weitere Grafikinformationen zu extrahieren und diese in dem Videopanorama anzuzeigen.

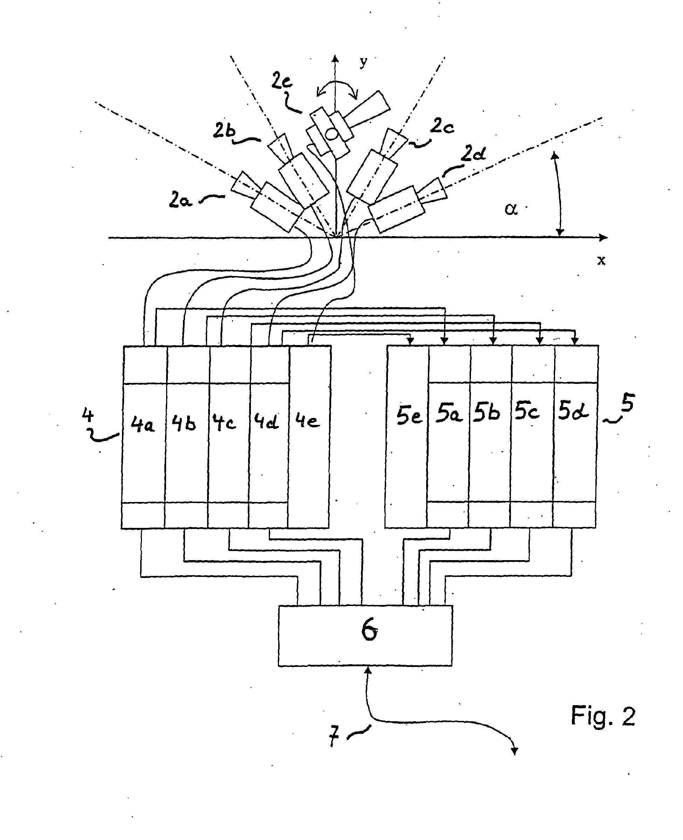

Die Figur 2 lässt eine schematische Darstellung des Systems von Beobachtungskameras 2 erkennen, die parallel an die Videokompressionseinheit 4 und die Bildauswerteeinheit 5 angeschlossen sind. In dem dargestellten Ausführungsbeispiel einer Minimalkonfiguration sind vier Einzel-Beobachtungskameras 2a, 2b, 2c, 2d mit vorgegebenen Objektivbrennweiten zur Abdeckung eines Sichtwinkels von ca. 180° vorgesehen. Weiterhin ist eine durch Fernsteuerung dreh- und schwenkbare Zoomkamera 2e mit variabler Brennweite installiert. Alle Beobachtungskameras 2 sind in temperaturstabilisierten und wasserdichten Gehäusen montiert. Die Beobachtungskameras 2 sind standardmäßig mit Infrarotfiltern ausgerüstet. Diese halten Infrarot-Lichtanteile von dem infrarotempfindlichen CCD-Chip fern und erhöhen dadurch Kontrast und Farbqualität. In dem Panoramakamerasystem sind die standardmäßigen Infrarotfilter entfernt und durch vom Objekt wegschwenkbare Infrarotfilter im Gehäuse ersetzt. Bei Dunkelheit und schlechter Sicht werden die Infrarotfilter vom Objektiv weggeschwenkt und erhöhen dadurch die Sichtbarkeit von Objekten in der Videoprojektion im Vergleich zur natürlichen Sicht durch den Operateur. Aus dem geforderten horizontalen Sichtwinkel und der CCD-Chip-Abmessung (hier 1") ergibt sich eine Objektivbrennweite f von typischerweise 12,5 mm. Die Abbildungsverhältnisse und Auflösungsgrenze für abgebildete Objekte ergeben sich aus der elementaren Abbildungsgleichung:

$$f = (g * B) / (G + B)$$

und dem halben Öffnungswinkel

$$\theta = \arctan (B / f)$$

mit der Brennweite f, der Gegenstandsweite g, der Gegenstandsgröße G, der Bildgröße auf dem CCD-Chip B (= halbe vertikale Chip-Abmessung) und dem Bildabstand b ≈ f, da g >> f. Typischerweise beträgt θ ca. 20°. Der bei einer Beobachtungshöhe H auf dem CCD-Chip abgebildeter Abschnitt des zu überwachenden Flughafenbereichs in Beobachtungsrichtung (maximaler Abstand L) entspricht auf Grund der Perspektive in vertikaler Richtung

$$B_L \approx B - f * (H / L).$$

Der vertikale Sichtwinkel erlaubt bei horizontaler Ausrichtung der optischen Achse eine Beobachtung ab einer Minimaldistanz von ca. d ≈ 60m. In dieser Konfiguration ist in etwa die eine vertikale Bildhälfte durch den entsprechenden Ausschnitt der Flughafenoberfläche und die andere Hälfte, ggf. reduziert durch höhere Objekte, durch den Himmel ausgefüllt. Sofern nur Bodenbewegungen zu überwachen sind, ist dieser Bereich in der Panoramaprojektion frei zur Integration von Daten. Die horizontale Auflösungsgrenze in 1000 m Entfernung beträgt in Beobachtungsrichtung ca. 2 m pro einen Pixel und senkrecht zur Beobachtungsrichtung und vertikal etwa 0,5 m pro Pixel. Hieraus folgt, dass das Panoramakamerasystem um die Zoomkamera 2e zu ergänzen ist, um im Anflug- und Landebereich das ausgefahrene Fahrwerk, die Flugzeugkennung oder gefährdende kleinere Teile erkennen zu können.

Mit der fernsteuerbaren Pan-Tilt-(PTZ-)Zoomkamera 2e und ggf. weiteren einzelnen Beobachtungskameras 2 in der Nähe interessierender Bewegungsflächen (z. B. Rollweg-Runway-Kreuzung) wird eine adaptive Lupen- bzw. Fernglasfunktion realisiert. Bei Erkennung eines Objektes im Erfassungsbereich der Beobachtungskamera 2 mittels Echtzeit-Bildverarbeitung wird die Zoomkamera 2e dem Objekt automatisch nachgeführt. Dies ist entweder im closed-loop-Betrieb möglich, wobei die Positionsbestimmung mit durch die Bildauflösung begrenzter Genauigkeit erfolgt und die Geschwindigkeit der Echtzeit-Bild-Verarbeitung evtl. die Nachführung begrenzt. Das System kommt bei hohen Geschwindigkeiten in der Start- und Landephasen an seine Grenzen, so dass hier ggf. fest installierte Beobachtungskameras 2 in Runwaynähe in Einsatz kommen können. Eine Alternative ist der open-loop-Betrieb, bei dem die Positionssignale aus Satellitennavigationsgeräten mit Hilfe der Datenfunkempfangseinheit 14 von den Luftfahrzeugen zur Flugverkehr-Leiteinrichtung übertragen und zur Nachführung der Zoomkamera 2e genutzt werden. Hierzu kann ausgenutzt werden, dass Luftfahrzeuge im Rahmen von ADS-B (=Automatic Dependent Surveillance-Broadcast) in Zukunft zunehmend mit Satellitennavigationsgeräten auf Basis des GPS-WAAS bzw. GPS-EGNOS-Systems oder Galileo-EGNOS-Systems ausgestattet werden.

Durch den Einsatz von unterschiedlichen bildgebenden Sensorsystemen, wie Panoramakamera (Zeilenscanner) und Zoomkamera 2e (Flächenkamera) müssen verschiedene geometrische Abbildungen geeignet kombiniert werden. Dafür sind für die Bildzuordnung spezielle Algorithmen notwendig, die die einzelnen Bildkanäle entsprechend für die ausgewählte Darstellungsform der auf Projektionswand in der Leitzentrale 8 verzerrungsfrei kombinieren (Multi-Sensor-Fusion). Die hierzu erforderlichen geometrischen Transformationen müssen in Echtzeit realisiert und direkt auf die Rohdaten angewandt werden. Neben der geometrischen Transformation wird zudem eine radiometrische Adaption (Adaption der Spektralbereiche insbesondere im Hinblick auf Infrarotfilter) der zu fusionierenden Sensorrohdaten in Echtzeit durchgeführt.

Für jede Beobachtungskamera 2a-2e ist eine eigene Recheneinheit 4a bis 4e in der Videokompressionseinheit 4 zur Videodatenkompression und eine eigene Recheneinheit 5a bis 5e der Bildauswerteeinheit 5 vorgesehen. Zum Anschluss der Beobachtungskameras 2 an die Videokompressionseinheit 4 und Bildauswerteeinheit 5 können zudem an sich bekannte Framegrabber eingesetzt werden, um die hochauflösenden Videosignale am Ausgang der Beobachtungskameras 2 zu digitalisieren.

Eine Alternative zu in der Figur 2 dargestellten Beobachtung des Flughafenbereichs und der Panoramaerstellung ist eine Architektur mit einer einzigen rotierenden, extrem hoch auflösenden Panoramakamera 2 (CCD-Zeilenkamera mit vertikaler CCD-Zeile) mit sehr niedriger Bildrate (Bildauffrischrate entsprechend der Drehgeschwindigkeit von z. B. 5 Minuten, abhängig von Panoramawinkel (typisch 180°) und Auflösung (Bildpunkte typisch 20.000 horizontal * 5.000 vertikal)) zur Darstellung der quasi statischen Szenerie, in die einzelne Videos von Beobachtungskameras 2 mit normaler Videosequenz (25 bis 30 Hz) integriert sind, die ausgewählte Verkehrsflächen (Anflug, Runway, Aufsetzpunkt, Abroller, Runway-Rollweg-Kreuzungen, etc.) mit dynamischem Inhalt (bewegte Objekte) beobachten. Diese Beobachtungskameras 2 sind wie in der oben beschriebenen Ausführungsform als PTZ-Zoomkameras 2e am Ort der Panoramakamera 2 montiert und/oder als lokale Beobachtungskameras 2 im Bereich der Bewegungsflächen in der Nähe von verkehrsrelevanten Punkten, d. h. der ausgewählten Verkehrsflächen montiert.

Diese hochauflösenden panoramaintegrierten dynamischen Videos, können dann automatisch (adaptiv) vergrößert dargestellt werden, sobald in dem Bereich bewegte Objekte über die Echtzeit-Bildverarbeitung in der Bildauswerteeinheit 5 erkannt werden oder durch über die Datenfunkempfangseinheit 14 empfangene integrierte Satellitennavigationssignale lokalisiert sind. Ohne bewegte Objekte kann die Größe der dynamischen Videos dem hoch auflösenden Panorama angepasst werden. Schwenkbare ferngesteuerte Kameras können bezüglich ihrer Erfassungsrichtung mittels Echtzeit-Bildverarbeitung zur Objekterkennung oder mittels der Satellitennavigationssignale oder mittels Positionsinformationen aus bodengestützten Lokalisierungssystemen den bewegten Objekten nachgefahren werden. Dies entspricht dem Verfolgen der Fahrzeuge/Luftfahrzeuge mittels Fernglas durch den Lotsen vom Tower aus.

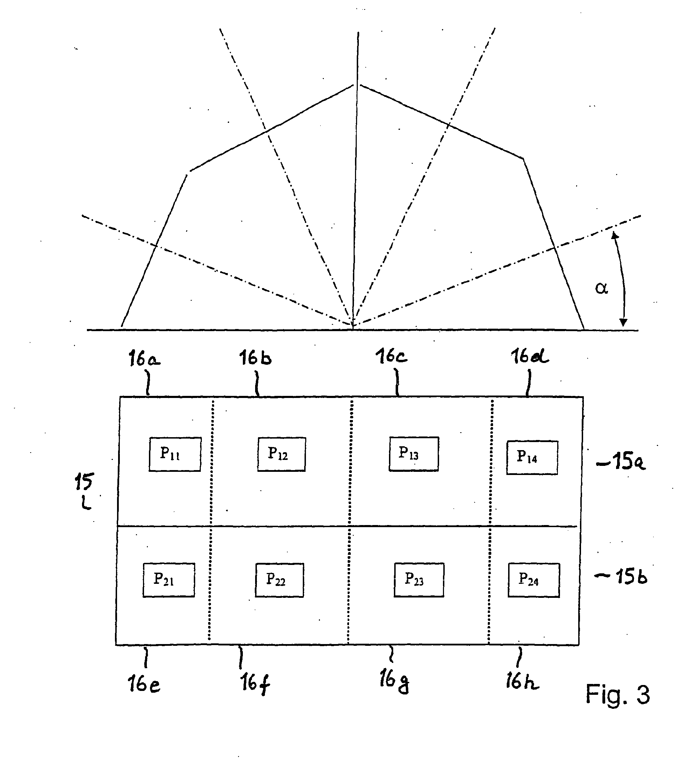

Die Figur 3 lässt eine Skizze einer Videoprojektion 15 erkennen, wie sie von der Videoprojektionseinrichtung 9 generiert wird. Ein oberer Bereich 15a der Videoprojektion ist als Panorama entsprechend der Sicht aus einem Tower auf einen Flughafenbereich mit einem Sichtwinkel von 180° vorgesehen. Die Beobachtungskameras 2 decken dabei jeweils einen Blickwinkel $\alpha$ ab, deren Summe insgesamt den Sichtwinkel von beispielsweise 180° ergeben.

Die skizzierte Panoramadarstellung erfolgt in den beiden übereinander liegenden Reihen 15a, 15b von je vier hoch auflösenden Displays 16a bis h oder Weitwinkel-Großprojektionen mittels DLP-Projektoren (Digital-Light-Processing DLP).

Die über die Gbit-Ethernet-Datenübertragungsleitung zur Leitzentrale 8 übermittelten Daten und Verkehrsparameter werden nach optoelektronischer Wandlung zu einer Recheneinheit der Videoprojektionseinrichtung 9 zur Live-Panoramaprojektion übertragen und zum anderen mit ggf. weiteren Informationen aus anderen Quellen in einer Datenbank beispielsweise auf dem Datenspeicher 11 abgespeichert. Die Live-Videodaten werden nach der Dekompression zusammen mit Verkehrs-Wetter- und Geländedaten aus der Datenbank zur integrierten Situationsdarstellung im Videopanorama fusioniert (Augmented Vision). Insbesondere werden Label mit Flug (-zeug) bzw. Fahrzeugdaten an die bewegten Objekte angehängt.

Im Gegensatz zu am Kopf des Nutzers getragenen (headmounted) Displays, mit denen einzelne Operateure ausgestattet werden könnten, ist auf Grund der Panoramadarstellung kein Trackingsystem für die Operateurbewegung erforderlich. Die mit der Bildauswerteeinheit 5 erkannten Objekte sind anhand der Zuordnung zur Beobachtungskamera 2 und der Pixelkoordinaten lokalisiert, so dass die zugeordneten Computergrafiken und Daten, z. B. Rufzeichen, zugewiesene Landebahn oder Gate, an exakt diesen Koordinaten oder ggf. versetzt den Objekten in der Videoprojektion $P_{1j}$ mit j = 1 bis 4 überlagert werden müssen. Bei unterschiedlicher Auflösung von Beobachtungskameras 2 und Projektion sind die Pixelkoordinaten über eine entsprechende Transformation umzurechnen. Im Gegensatz zu den üblicherweise in Augmented Vision Systemen verwendeten headmounted Displays bietet eine Weitwinkel-Großprojektion des Videopanoramas auch den Vorteil, dass die Szene auf einfachere Weise mehreren Operateuren dargestellt werden kann, da das sonst erforderliche Head-Tracking der einzelnen Operateure, d. h. das Nachverfolgen der Kopfbewegungen entfällt.

Um für den Operateur perspektivische Verzerrungen der Verkehrssituationsdarstellung zu vermeiden, müssen die Projektionsflächen in der oberen Draufsicht in der Figur 3 skizziert winklig entsprechend der Ausrichtung der einzelnen Beobachtungskameras 2 des Panoramasystems angeordnet werden.

In der dargestellten Ausführungsform sind vier Einzelprojektionen $P_{l,j}$ mit j = 1 bis 4 in zwei Zeilen l = 1 und 2 übereinander angeordnet. In der oberen Zeile 15a wird das Videopanorama mit kohärent integrierten Daten dargestellt, während die untere Zeile 15b eine virtuelle Draufsicht auf der Basis von Datenbank- und Gelände- und Verkehrs- / Wetterinformationen aus entsprechenden Bodenverkehrslage-Sensorsystemen (Multilateration, Radar, ADS-B mit Satellitennavigation) enthält.

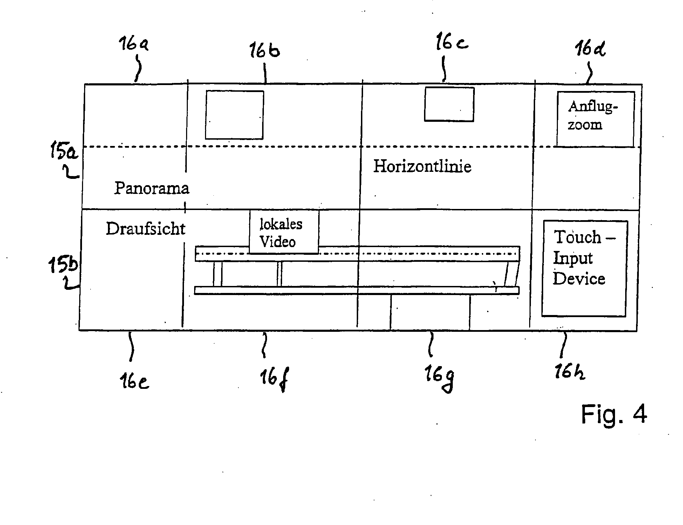

Die Aufteilung des Videopanoramas in zwei Zeilen mit Panoramasicht 15a und Draufsicht 15b ist nochmals in der Figur 4 zu erkennen.

Während in der Draufsicht die Flugzeugpositionen durch Rufzeichen und ggf. weitere Flugdaten wie Gate-Nummer, Startbahn und Richtung, Geschwindigkeit dargestellt sind, werden an die Objekte im Videopanorama Label angehängt, welche die relevanten, individuellen Flugdaten enthalten. Sowohl in die Panoramasicht als auch in die Draufsicht können bei Bedarf an die zugeordneten Positionen einzelne zusätzliche Videos eingeblendet werden, die von einzelnen an strategischen Positionen des Flugfeldes, stehenden Beobachtungskameras 2, von zusätzlichen Beobachtungskameras 2 mit Zoomfunktion an der Position des Netzwerks von Beobachtungskameras 2 oder von insbesondere bei schlechter Sicht und Nachts zum Einsatz kommenden Infrarot-Beobachtungskameras 2 stammen.

Dies ist in der Figur 4 als Anflugzoom in der Projektion 16d rechts oben und der Projektion 16f in der Draufsicht skizziert.

Dynamisch integriert in das Videopanorama sind Verkehrsdaten, die an die einzelnen Objekte (Flugzeuge, Fahrzeuge) als Label angehängt werden und sich mitbewegen, wie z. B. Flugzeugkennzeichen, Runway, Gate. Neben dieser kohärenten Überlagerung werden weitere Daten, wie z. B. Wetterinformationen an geeigneter Position statisch in das aus den mit den Beobachtungskameras aufgenommenen Bilddaten und/oder aus computergrafischen vorliegenden Informationen des Flughafenbereichs erzeugten Videopanoramas integriert. Hierbei muss ein Verdecken von zu überwachenden Objekten in der rekonstruierten Außensicht durch überlagerte Daten, das sogenannte "Cluttering" vermieden werden. Da aus den Parametern des Panoramakamerasystems eine etwa hälftige vertikale Aufteilung des Panoramas mit Himmel in der oberen Hälfte der Projektionen $P_{1j}$ folgt, bietet sich dieser Bereich für die Darstellung der objektunabhängigen Informationen an. Wetterinformationen, wie Windgeschwindigkeit, Windrichtung, Sichtweite RVR, Luftdruck etc., werden deshalb in der oberen Hälfte (Himmel) der Panoramaprojektion eingeblendet, so dass die Messwerte so weit möglich die zugehörigen Messorte andeuten. So kann z. B. eine die Windgeschwindigkeit durch einen entsprechenden längenvariablen Richtungspfeil im Anflug und Runwaybereich sowie der Runway-Visual-Range RVR, d. h. die Landebahnsichtweite, an den entsprechenden Messorten angegeben werden. Die von der Windrichtung abhängige aktive Start-/Landebahnrichtung, d. h. die Start- und Landerichtung, wird durch einen entsprechenden Pfeil an der Start-/Landebahn angedeutet. Sofern auf einem größeren Flugplatz ein Wirbelschleppen- und/oder Scheerwindwarnsystem installiert ist, können geeignete Symbole unmittelbar an den relevanten Orten eingeblendet werden.

Aus der Figur 4 ist auch zu erkennen, dass weitere Grafikinformationen, wie beispielsweise eine Horizontlinie eingeblendet werden können.

Eine Flughafen- (Gelände-) Datenbank liefert Informationen zur Darstellung des quasi statischen Anteils des virtuellen Flughafenszenarios. Damit können insbesondere bei Dunkelheit und schlechter Sicht Rollwege durch Konturen hervorgehoben werden, in denen Flugzeuge und Fahrzeuge zu erwarten sind. Diese können ggf. durch infrarotempfindliche Beobachtungskameras 2 oder Wärmebildkameras sichtbar gemacht werden. Ebenfalls bei Dunkelheit kann das standardmäßige Infrarotfilter der verwendeten hoch auflösenden CCD-Beobachtungskameras 2 von den Objektiven weggeklappt werden, um das Nahinfrarot zur Videodarstellung zu nutzen.

An Rollweg-Runway-Kreuzungen können dem Panorama Warnsymbole überlagert werden, sobald eine Runway-Incursion-Situation droht, d. h. wenn ein vom Überwachungssystem erkanntes landendes oder startendes Flugzeug sich gleichzeitig mit einem auf dem Taxiway rollenden Flugzeug der Kreuzung nähert.

Beispielsweise in der oberen Hälfe (Himmel) der Teilprojektion $P_{11}$ oder $P_{14}$ (je nach Landerichtung) kann bei Starts oder Landungen zusammen mit Wirbelschleppen oder Scherwindsymbolen ein Bild der Zoomkamera 2e eingeblendet werden, um zum Beispiel gegebenenfalls Fahrwerksprobleme zu erkennen. Dies ist als Anflugszoom im Panorama 16d der Figur 4 skizziert.

Ausgewählte Projektionen der Draufsicht, wie beispielsweise die Projektion 16h, kann auch verkleinert werden, um ein so genanntes Touch-Input-Device darzustellen. Derartige Touch-Input-Devices sind als Multifunktionsdisplays an sich bekannt. An dieser Position können auch Multi-Radartrackerdaten oder ein seitliches Anflugprofil aus Transponder-Höhendaten dargestellt werden, wobei für Eingabeoptionen durch die Lotsen ein Touch-Panel eingeblendet wird. Im Fall einer vom Operateur einige Meter weit entfernten Projektion kann die Interaktion entweder über eine konventionelle Computermaus oder durch einen virtuellen Laserpointer erfolgen.

Die Bodenlagedarstellung in der Draufsicht in der unteren Projektionszeile 15b kann ggf. auch ohne Bodenradar oder Multilateration nur aus dem Videopanorama gewonnen werden. Aufgrund der Perspektive ist die Ortsauflösung in $\gamma$-Richtung kleiner als in x-Richtung. Die Höhe z beträgt Null bei rollenden und stationären Objekten. Die Höhe z größer Null bei landenden und startenden Flugzeugen kann zum einen über lineare Extrapolation der Runway bis zur Vertikalen unter dem Flugzeug und zum anderen durch Vergleich der aus der Bildverarbeitung ermittelten Konturmaßen mit in der Datenbank abgelegten Flugzeugabmessungen bzw. Konturen gewonnen werden.

Zur automatischen Erstellung einer Flugzeugdatenbank wird die Flugverkehr-Leiteinrichtung mit lernfähigen Bildverarbeitungsalgorithmen ausgestattet, zum Beispiel ein zur Mustererkennung geeignetes neuronales Netz, das jedes landende Flugzeug erfasst und als Parametersatz zusammen mit dem aus den aktuellen Flug(plan)daten bekannten Typinformationen in der Datenbank ablegt (neuer Flugzeugtyp) bzw. mit den dort vorhandenen Konturen vergleicht (bekanntes Flugzeug) und dadurch sowohl klassifiziert und gegebenenfalls identifiziert und durch Größenvergleich die aktuelle Entfernung abschätzt.

Ergänzend zu der reinen Video-Panorama-Projektion kann ein virtuelles dreidimensionales Flughafenszenario, wie grundsätzlich aus Towersimulatoren bekannt, mit integrierten Videoszenen kombiniert werden. Die Zuordnung des videoüberwachten Bereichs ist mittels der räumlich kohärenten Integration der Bilddaten und Verkehrsparameter in das virtuelle Flughafenszenario für den Operateur unmittelbar gegeben. Die virtuelle Darstellung einer Flughafenoberfläche auf der Basis einer (Gelände-) Datenbank kann auch benutzt werden, um aus einer beliebig zu wählenden Perspektive die Verkehrslage mit modelierten Flugzeugen darzustellen, deren Objekteigenschaften (Typ, Position, Geschwindigkeit, Richtung) aus der Video-Bildverarbeitung durch die Bildauswerteeinheit 5 abgeleitet werden. Zusätzlich können Informationen auch aus den Satellitennavigationsinformationen bzw. Radarsensorik abgeleitet werden.

Ein solches virtuelles dreidimensionales Flughafenszenario ermöglicht eine beliebige (virtuelle) Beobachterposition des Lotsen einschließlich des Heranzoomens an beliebige, interessierende Flughafenbereiche. Damit die in die virtuelle dreidimensionale Szene integrierten Videos dem gewünschten Perspektivwechsel des Betrachters kohärent folgen, sind diese als Echtzeit-Stereo-Rekonstruktionen zu integrieren, wobei jeweils mindestens zwei kalibrierte Beobachtungskameras 2 eine Szene aus unterschiedlichen Blickwinkeln beobachten. Dies erlaubt auch für die videoüberwachten Bereiche, zum Beispiel Vorfeld, Taxiway-/Runway-Kreuzungen, Anflug-, Abflugsektoren, eine beliebige Einstellung der Beobachterposition mit einem nahtlosen Übergang zu den aus Datenbankinformationen generierten Sektoren.

Die automatische Erkennung von Objekts und Extraktion von Verkehrsparametern durch die Bildauswerteeinheit 5, sowie eine hierauf basierende Aufmerksamkeitssteuerung durch Auffinden und Verfolgen von Flugobjekten wird nachfolgend noch detaillierter erläutert.

Für die Flugsicherung ist es wichtig, die entscheidenden Informationen hervorzuheben, da eine Aufmerksamkeit auf alle Veränderungen das Flugsicherungspersonal überfordert. Es gibt eine Reihe von Bewegungen, die das Flugsicherungspersonal nur ablenken können, wie beispielsweise sich bewegende Wolken und aufsteigender Rauch. Weiterhin gibt es Lichtreflektionen (Sunglitter) durch bewegte Fensterscheibe oder Reflektionen von Dächern oder die Bewegung von Bäumen. Dem Flugsicherungspersonal ist sehr geholfen, wenn die Flugzeuge schon frühzeitig in der Luft erkannt werden und die Fahrzeuge auf dem Flugfeld markiert werden. Die Flugzeuge können dann über eine Aufmerksamkeitssteuerung hervorgehoben und weiterverfolgt werden. Insbesondere kann der Aufsetzpunkt des landenden Flugzeugs bestimmt und auch Turbulenzen hinter dem Flugzeug sichtbar gemacht werden. Auch Vogelschwärme oder einzelne größere Vögel können angezeigt werden, um gegebenenfalls Schaden an den Triebwerken vorzubeugen.

Daher werden in der Bildauswerteeinheit 5 Objekte (Flugzeuge, Fahrzeuge, Vögel, Vogelschwärme, Wirbelschleppen etc.) über verschiedene Eigenschaften von Bewegung und Textur erkannt. Dazu werden im Anschluss an eine Rauschunterdrückung Differenzen aufeinander folgender Bilder und Differenzen benachbarter, kleinerer Bildbereiche ausgewertet. Um interessierende von nicht interessierenden Bewegungen zu unterscheiden, werden vorzugsweise drei Eigenschaften analysiert:

a) entfernungsabhängige Größen von Bewegungsflächen,

b) Sichtwinkel der Bewegung,

c) Bewegungsgeschwindigkeit im Verhältnis zur Objektgröße.

Zur detaillierteren Untersuchung der bewegten Bereiche werden anschließend deren Texturen analysiert. Hierbei fließt Vorwissen über die möglichen Bewegungen interessierender Objekte ein. So sind zum Beispiel landende Flugzeuge nur ein einem von vornherein bekannten engen Korridor zur erwarten. Bewegungsmuster und Texturen von Vögeln unterscheiden sich deutlich von denen langsam dahin ziehender Wolkenformationen.

Zur Optimierung der Entscheidung über die Detektion interessierender bewegter Objekte wird ein hierarchisches Prinzip verwendet, bei dem Eigenschaften über eine Zugehörigkeitsfunktion zu einer Klasse (Wertebereich 0 bis 1) mit Schwellwert definiert sind. Jeweils zwei Eigenschaften werden zu einer neuen Eigenschaft verkoppelt und anschließend mit der nächsten zugehörigen Eigenschaft verknüpft.

Wirbelschleppen werden bei Bedarf mittels Texturanalyse im Bildbereich hinter erkannten Flugzeugen gesucht. Da das Suchfeld sehr eingeschränkt ist, kann eine wesentlich intensivere Verarbeitung erfolgen, ohne die Echtzeitfähigkeit zu gefährden.

Die Texturuntersuchungen werden mit einer größeren Wechselwirkung, d.h. einer Berücksichtigung sehr viele Punkte für die Texturbestimmung durchgeführt. Hierbei werden mehrere Zonen der Texturen untersucht, mindestens jedoch drei. Die erste Zone befindet sich unmittelbar hinter dem Flugzeug, wo die Veränderung der Textur stark aber sehr kurzreichend ist. Dann folgt ein zweiter Bereich mit einer starken und weitreichenderen Textur, d.h. die Beziehung der elementaren Texturen $Textur_{i,j}$ wird mit einer großen Anzahl n gebildet. In dem letzten Bereich ist der Wert für n in der Texturformel noch größer und die kurzreichenden Wechselwirkungen sind in der Textur nahezu nicht vorhanden. Wenn diese drei Strukturen auffindbar sind, so kann für eine Wirbelschleppe entschieden werden. Dabei sind dann alle drei Bereiche der Wirbelschleppe zugehörig.

Für die Texturanalyse wird ein Punkt aus dem zu untersuchenden Gebiet herausgenommen und dessen Grauwert mit allen benachbarten Grauwerten innerhalb des interessierenden Gebietes und der unmittelbaren Umgebung untersucht. Hierbei soll unter unmittelbarer Umgebung eine Entfernung von etwa 10 Pixelpunkten vom Rand der Fläche verstanden werden. Dies ist erforderlich, da die Fläche unter Umständen zu klein gewählt worden ist, oder auch Randeigenschaften entscheidend zur Beurteilung des Objektes sind.

Von einem Punkt (i, j) aus werden alle Absolutbeträge der Differenzen der Grauwerten aufaddiert und damit die Textureigenschaft an diesem Punkt (i, j) beschrieben. Die Ausdehnung der betrachteten Pixel vom Zentrumspixelpunkt (i, j) sollten etwa $n = \sqrt{Bildpixelanzahl}\,/100$ betragen. Damit wird die lokale Textur am Punkt (i, j) durch die Gleichung

$$Textur_{i,j} = \frac{1}{n}\sum_{l=-n}^{n}\left(\left|b_{i+l,j+l} - b_{i,j}\right| - th\right) > 0$$

beschrieben. Hierbei ist th eine Schwelle, die ein eventuelles Bildrauschen unterdrückt, indem alle Werte, die kleiner als th sind, keinen Beitrag liefern. Die Änderung der Schwelle wird auch benutzt, um verschiedene Textureigenschaften zu ermitteln.

Zur Selektion von bewegten Flugobjekten kann folgendes Konzept genutzt werden:

Die verwendeten Methoden sollten relativ unabhängig von der Beleuchtung, d.h. den maximalen Grauwerten sein, damit das Verfahren bei verschiedenen Beleuchtungsverhältnissen und Wetterbedingungen gut funktioniert. Daher werden Eigenschaften aus Differenzen von zeitlich aufeinander folgenden Bildern, aus Differenzen von eng benachbarten kleinen Gebieten und den elementaren Änderungen der Struktur, wie Texturen, ermittelt.

Zur Bestimmung der Flugzeuge in der Luft werden besondere Eigenschaften benutzt, die sich aus der Bewegung und der Textur ergeben. Aus der Differenz von zeitlich kurz aufeinander folgenden Bildern werden zunächst alle Regionen ermittelt, in denen sich etwas bewegt. Um nicht auch Rauscheffekte in den Differenzbildern zu markieren, wird eine Rauschunterdrückung durchgeführt, die im einfachsten Falle in zwei Schritten erfolgt:

a) $Bild_{Smooth} = Smooth(Bild, const_l)$, wobei $const_l$ eine ganze Zahl ist, die bei etwa 3 liegt;
b) $Bild_{Rauschunterdrückt} = Bild_{Smooth} > const_2$, wobei für $const_2$ angenommen werden kann
$const_2 = maximum(Bild_{Smooth}) * 0{,}2$, d.h. etwa 1/5 des maximalen Grauwertes.

Bei starken Schwankungen in den Grauwerten wird der Wert $const_2$ besser über den Median oder den Mittelwert bestimmt, also

$$const_2 = median\left(Bild_{Smooth}\right) * 0{,}2$$

bzw.

$$const_2 = mean\left(Bild_{Smooth}\right) * 0{,}2 \,.$$

Die Bewegungen im Bild werden aus dem Absolutbetrag der Differenz von rauschunterdrückten Bildern zu den Zeitpunkten $t_1$ und $t_2$ $(t_2 > t_1)$ gewonnen.

$$Bild_{Bewegung} = \left|Bild_{Rauschunterdrückt}(t_2) - Bild_{Rauschunterdrückt}(t_1)\right| \,.$$

Die Gebiete der Bewegung ergeben sich aus Werten oberhalb einer angenommenen Schwelle S, die im Allgemeinen bei S=1 oder einer Zahl größer als Eins liegt, und können nach der Gleichung

$$Bild_{Bewegungsgebiet} = \left(Bild_{Bewegung} \geq S < (S+1)\right) - S$$

berechnet werden. In diesem Bewegungsgebiet sind noch interessierende und nicht interessierende Informationen vereinigt, wie die nicht interessierende Wolkenbewegung mit den wandernden Schatten auf dem Boden und die interessierende Bewegung der Flugzeuge. Um hier eine Unterscheidung zu treffen, werden mehrere Eigenschaften generiert und zusammengefasst.

Ein Merkmal ist die Größe der bewegten Flächen. In der Abhängigkeit der Entfernung eines Gebietes von der Beobachtungskamera 2 werden Flächengrößen festgelegt, innerhalb derer ein Flugzeug oder Auto liegen muss, um dieses Fahrzeug vom Schatten der Wolken oder ziehenden Wolken zu unterscheiden.

Zum anderen wird ein Winkel berechnet, unter dem ein bewegter Gegenstand gesehen wird. Ist der Winkel von einer Größe, in der normalerweise nur Wolken zu erwarten sind, dann steht ein Merkmal zur Verfügung, dass eine bedingte Unterscheidung von einem Flugzeug ermöglicht.

Als drittes Merkmal kann die Schnelligkeit der Bewegung im Verhältnis zu seiner Größe betrachtet werden. Wenn sich der Gegenstand schnell im Verhältnis zu seiner Größe bewegt, ist ein gewisses Indiz für ein Flugzeug gegeben.

Das vierte ableitbare Merkmal betrifft die Textur dieses Gegenstandes. Die Texturen von Wolken und Flugzeugen unterscheiden sich grundlegend.

Als fünftes Merkmal wird das Verhältnis von Fläche zum Umfang (Perimeter) des Gebildes betrachtet. Für.den Fall von Wolken kann in einfachster Näherung ein Kreis angenommen werden, so dass die Beziehung

$$Param_1 = \frac{\sqrt{Fläche * 4\pi}}{Perimeter} = \frac{\sqrt{\pi}r 2\sqrt{\pi}}{2\pi r} = 1$$

folgt. D.h., wenn die Fläche des Gebietes mit $4\pi$ multipliziert wird und daraus die Wurzel gezogen wird und das Ergebnis mit dem Umfang verglichen wird, ist bei einem Ergebnis von merklich kleiner als eins ein Flugzeug zu erwarten und ansonsten eine Wolke.

Als sechstes Merkmal wird die Größe der Überlappungsfläche angesehen. Wenn diese an den beiden Enden sehr groß und in der Mitte kaum zu sehen ist, liegt eine geringe Struktur in dem bewegten Gegenstand vor. Dies weist auf ein Flugzeug hin, wenn dieses noch so weit entfernt ist, dass Schriftzüge am Flugzeug noch nicht zu erkennen sind.

Als siebtes Merkmal können typische Silhouetten für Flugzeuge zu deren Erkennung über einen Mustervergleich benutzt werden.

Als achtes Merkmal wird die Konstanz der Bewegungsrichtung eines Objektes innerhalb eines Gebietes des Flughafens genutzt, d.h. die vorgegebenen Flugschneisen. Wolken bzw. Schatten bewegen sich frei in beliebige Richtung, die vom Wind bestimmt sind.

Alle diese Merkmale werden miteinander verkoppelt, um zu einer besseren Aussage zur Entdeckung von Flugzeugen zu kommen.

Texturunterschiede können wie folgt ausgewertet werden:

Nach dem alle Flächen bestimmt sind, in der für die Objekterkennung wesentliche Bewegungen, d.h. keine zufälligen kleinen Bewegungen wie bewegte Blätter von Bäumen oder Schwanken von Masten vorkommen, werden die einzelnen Gebiete mit bewegten Objekten untersucht. Dazu werden die Beziehungen der Grauwerte zwischen den Bildpunkten innerhalb einer beschränkten Entfernung wie oben bereits erläutert untersucht. Hierzu wird ein Punkt aus dem zu untersuchenden Gebiet herausgenommen und dessen Grauwert mit allen benachbarten Grauwerten innerhalb des interessierenden Gebietes und der unmittelbaren Umgebung untersucht.

Wenn die Fläche total gleichförmig ist, ergibt sich nach der oben genannten Formel der Wert $Textur_{i,j}=0$. Wenn sich die Textur stärker verändert, wie bei einem Baum, Büschen oder stark strukturierten Wolken, wird dieser Wert wesentlich größer als eins. Bei Flugzeugen oder Fahrzeugen liegen größere gleichförmige Flächen vor, so dass dort das Ensemble der i*j-Werte für $Textur_{i,j}$ klein ist. An den Rändern der Flugzeuge oder Fahrzeuge wird dann ein Textursprung auftreten. Um leichter eine Weiterverarbeitung im Zuge der Zusammenfassung von Eigenschaften durchführen zu können, wird ein verallgemeinertes Bild erzeugt, indem die Werte für die $Textur_{i,j}$ als Grauwerte an den Pixelpunkten (i, j) benutzt werden.

Für eine weitere Verknüpfung von Eigenschaften werden Flächen benötigt, über denen weitere mehr funktionale Eigenschaften beschrieben werden. Dabei kann eine Schwelle für die Textur benutzt werden, die einen Flächencharakter hat, wie zum Beispiel geringe Schwankungen. Bei Überschreiten der Schwelle werden dann die starken Schwankungen näher betrachtet. So ist eine hierarchische Betrachtung von Textureigenschaften möglich, die eine genauere Beschreibung des bewegten Objektes ermöglichen.

Um eine flächenhafte Darstellung zu erhalten, werden hinreichend große Schwellen $th_{tex}$ benutzt, so dass sich mit Hilfe einer Division durch th$_{tex}$ ganzzahlige Werte ergeben, die ein binäres Bild mit den Bildpunkten B$_{i,j}$

$$B_{i,j} = Entier\left(Textur_{i,j} \, / \, th_{tex}\right)$$

generieren. Durch verschieden große Wahl von th$_{tex}$ können verschiedene Flächen von unterschiedlichen Texturverhältnissen dargestellt werden.

Auch die Vogelschwärme können über solche Texturbetrachtungen ermittelt werden. Dazu werden die einzelnen kleinen Gebiete etwa gleicher Textur auf ihre Ähnlichkeit verglichen und auf ihre örtliche Verteilung untersucht. Besonders zur Bestimmung der Ausdehnung eines Objektes sind solche Textureigenschaften gut geeignet. An der Übergangsfläche vom Flugzeug zu den Wolken entsteht ein Sprung in der Textur, der verhältnismäßig deutlich ausfällt und ein Merkmal für die Grenzen des Objektes ist. Da die Objektgrenzen besonders deutlich ausfallen, kann diese besonders markante Grenze auch als Eigenschaft zum Auffinden von Flugzeugen benutzt werden. Die Übergänge von Wolken sind an den Grenzen bezüglich ihrer Textur nicht so scharf. Es ist hier zu bemerken, dass ein Sprung in den Grauwerten nicht immer auch einen wesentlichen Sprung in der Textur ergibt, da zum Beispiel zwei Flächen mit verschiedenen aber gleichförmigen Grauwerten beide einen Texturwert nahe Null ergeben.

Die Auswertung der Bewegungsunterschiede und der Höhe zum Auffinden von Flugobjekten kann wie folgt durchgeführt werden.

In den Flächen, die als bewegte Flächen erkannt worden sind, werden die Gleichförmigkeit und Richtungskonstanz der Bewegungen untersucht. Wenn Flugzeuge erwartet werden, so sind deren Änderungen der Geschwindigkeit innerhalb eines kleinen Bereiches zu erwarten. Die untere Grenze ist durch die Minimalgeschwindigkeit des Flugzeuges gegeben, um genügend Auftrieb zu erhalten. Die obere Grenze ist durch die Höchstgeschwindigkeit des Flugzeuges vorgegeben. Auch die Richtungsänderungen unterliegen Grenzen, die durch den großen Wendekreis der Flugzeuge bestimmt sind. Weiterhin benutzen die Flugzeuge normalerweise bestimmte Korridore, so dass Änderungen der Flugrichtung von vornherein bekannt sind, wenn keine Besonderheiten auftreten. Damit geben Aussagen über die momentanen Änderungen bzw. Konstanz der Geschwindigkeit und Konstanz der Richtung bzw. deren Änderungen eine Information über das Objekt. Der Korridor in der Nähe des Flughafens ist dreidimensional, so dass auch die Höhe, die sich aus dem relativen Winkel zu bekannten Gegenständen (Häuser, Bäume) im Flughafenfeld bestimmen lässt. Diese Bewegungen unterscheiden sich wesentlich von der Bewegung von Vögeln, die Geschwindigkeit und Richtung häufig wechseln. Auch die Bewegung von Wolken oder deren Schatten erfolgt nicht in vorgegebenen Richtungen und meist auch langsamer oder zumindest anders als Flugzeuge. Wolken bewegen sich aus physikalischen Gründen auch immer in der gleichen Höhe (adiabatische Gleichung) und können auch damit von landenden oder startenden Flugzeugen unterschieden werden.

Aus diesen Tatsachen können Größen abgeleitet werden, die zur Entscheidung über das bewegte Objekt benutzt werden. Dazu werden jeweils zwei zeitlich benachbarte Bilder zum Zeitpunkt t$_1$ und t$_2$ voneinander abgezogen und die Differenzflächen als F$_1$ gespeichert. Das gleiche wird zu einem nachfolgenden Zeitpunkt t$_3$ und t$_4$ durchgeführt, wobei die Differenzfläche F$_2$ gespeichert wird. Durch Addition der Differenzflächen F$_1$ und F$_2$ werden vier einzelne Flächenwerte gewonnen, die in einer Linie verbunden die Bewegungsrichtung ergeben. Die Flächengrößen am Ende (heller bzw. dunkler) normiert über die Gesamtfläche ergeben ein Maß für die Geschwindigkeit des Flugobjektes.

Die einzelnen Eigenschaften werden dann zur besseren Entscheidungsfindung wie folgt zusammengefasst.

Da die beschreibenden Eigenschaften für die interessierenden Objekte sich normalerweise nicht ausschließen, sondern teilweise ergänzen und es auch nicht möglich ist, eine ausgewählte Reihe von Eigenschaften zu bestimmen, die eindeutig und vollständig das gesuchte Objekt beschreiben, ist eine Normierung der Eigenschaften nicht möglich. Damit ist es auch nicht möglich, eine Wichtung der Eigenschaften vorzunehmen, um eine gewichtete Summe von Eigenschaften das Objekt zu beschreiben. Zudem sind die Eigenschaften von unterschiedlicher Natur. Die Eigenschaften werden daher über eine Zugehörigkeitsfunktion zu einer Eigenschaft, die in einem Bereich von 0 bis 1 abgebildet wird, beschrieben. Es werden dazu immer Verkoppelungen von je zwei Eigenschaften durchgeführt, die als neue Eigenschaft mit der nächsten Eigenschaft verknüpft wird. Damit ergibt sich ein hierarchisches Prinzip.

Da eine Addition der Werte nicht zulässig ist, muss für eine Summenbildung zunächst eine Schranke eingeführt werden, ab der ein am Ende erhaltener Wert überhaupt den Wert 0 überschreitet, also einen Betrag für eine Entscheidung der Existenz des Objektes liefert. Dies wird durch die nachfolgende Gleichung ausgedrückt:

$$y_i = y_j > Schranke \, .$$

Hierbei ist die Schranke bestimmt aus einer Grenze, bei der Wert für die Existenz einer Eigenschaft nur möglich bzw. sehr wahrscheinlich ist oder einen Sinn macht. Es werden immer zwei Größen zusammengefasst, von denen die eine mehr eine Fläche beschreibt und die andere mehr funktionale Eigenschaften über einer Fläche beinhaltet. Normalerweise sind die Fläche, die verknüpft werden soll, und die Fläche, über der die Funktionen beschrieben sind, ein und dieselbe. Es kann aber auch Flächen geben, deren korrespondierende Funktion über eine Fläche in der Nachbarschaft bestimmt ist. Das wäre zum Beispiel der Fall, wenn die Randregion eines Objektes, die nicht zur Objektfläche gehört, das Objekt beschreibt. Ein solcher Fall ist der Textursprung an der Randregion eines Flugzeuges. Mit diesem Textursprung ergibt sich eine wesentliche Eigenschaft für das Auffinden eines Flugzeuges.

Es werden nun alle Eigenschaften, die auf Flächen abgebildet worden sind, und die dazu korrelierenden Funktion einzeln in Beziehung zueinander gebracht und damit eine Fusion der Eigenschaften durchgeführt. Auf diese Weise werden alle Eigenschaften miteinander in Beziehung gebracht und ein reduzierter Eigenschaftsvorrat erzeugt. Die so erhaltenen verallgemeinerten Eigenschaften werden wieder zueinander in Beziehung gebracht und damit der Satz der Eigenschaften weiter reduziert. Dies wird solange durchgeführt, bis nur noch ein Ergebnis vorhanden ist, von diesem über eine Schwelle (meist 0,5) die Entscheidung für oder gegen die Existenz eines Objektes (z. B. Flugzeug) gefällt werden kann. Bei dem gegenseitigen Zusammenfassen können auch abgeleitete Eigenschaften (aus einer Fusion von Eigenschaften erhaltene Eigenschaften) wieder mit ursprünglichen Eigenschaften fusioniert werden. Damit ist ein hierarchisches Verfahren gegeben, das alle verfügbaren Informationen zusammenfasst.

Es ist auch möglich, in einem Zweischritt-Verfahren alle Eigenschaften zusammenzufassen. Es wird hier im Wesentlichen nach den zwei verkoppelten Eigenschaften gesucht, die dominierend sind. Von allen Vergleichen der Eigenschaften (von flächenhaften und funktionalen Eigenschaften, wird das Minimum ausgewählt, das sich ergibt zu:

$$w = \text{Minimum } (y_i, z_j)$$

mit der flächenhaften Eigenschaft $y_i$ und der funktionalen Eigenschaft $z_j$.

Von diesen Kombinationen gibt es nun wieder eine größere Anzahl, die durch die verschiedenen möglichen flächenhaften und funktionalen Eigenschaften $y_i$, und $z_j$ gegeben ist. Wenn es eine solche Anzahl k von verkoppelten Eigenschaften gibt, dann werden diese durch das Maximum der gleichwertigen Anteile nach der Formel

$$V = \text{Maximum } w_k$$

zusammengefasst. Ergibt sich ein Wert größer 0,5, dann wird für die Existenz des Objektes entschieden. Auf diese Weise können auch Klassen von Eigenschaften zusammengefasst werden.

Später erfolgt eine Verifizierung bei Zusammenfassung aller Eigenschaften in der Objektfläche und der unmittelbaren Umgebung, um eine genauere Objektbeschreibung zu erhalten. Damit werden mehrere Werte V gewonnen, die als Grundlage für eine Entscheidung durch Bildung des Mittelwertes oder Medians davon genutzt werden können.

Wenn ein bewegtes Objekt nach der Bearbeitung als Flugzeug erkannt worden ist, dann beginnt die Phase der Verifizierung. Hierzu werden verschiedene Eigenschaften zusammengefasst. Solche Eigenschaften betreffen die Textur des Flugzeugs, nämlich eine Gleichförmigkeit größer als in den umgebenden Wolkenbereichen und kleiner im Falle eines wolkenfreien Himmels. Der Differenzwert zur Umgebung wird also immer das Flugzeug hervorheben. Diese Eigenschaft wird multiplikativ verdoppelt mit Eigenschaften abgeleitet aus vorherigen Bildern, die eine Aussage über die Konstanz der Bewegung, die Konstanz der Richtung und der Richtungsänderung in der Höhe und seitlich liefern. Es werden die Werte innerhalb von Schranken betrachtet, die aus Schwellen gebildet werden. Die Schwellen werden so gewählt, dass im Falle des Erfüllens der Bedingung innerhalb der Schranken eine Eins erzeugt wird. Wenn die Werte nur in der Nähe des gewünschten Korridors liegen, werden entsprechend kleinere Werte generiert. Bei Multiplikation des Ergebnisses mit dem Wert, der aus der Textur abgeleitet wurde, wird das Multiplikationsergebnis kleiner, wenn das Bewegungsverhalten nicht dem eines Flugzeuges entspricht.

In gleicher Weise wird wie oben beschrieben, die Zusammenfassung der Eigenschaft der Silhouette des Flugzeuges (Flügel und Flugkörper) eingearbeitet. Es erfolgt auch hier wieder eine multiplikative Verknüpfung, die einen kleineren Wert als Eins liefert, wenn die Bedingungen nicht erfüllt sind. Nach der Zusammenfassung aller Eigenschaften kann der erhaltene Wert dann mit einer Schwelle verglichen werden, z. B. größer 0,5, um sich für ein Flugzeug zu entscheiden.

Danach kann eine Verfolgung des als Flugzeugs identifizierten Objektes durchgeführt werden. Wenn das vorherige Ergebnis für die Entdeckung eines Flugzeuges mit der des nachfolgenden Schrittes übereinstimmt, kann mit einem kleinen additiven Beitrag (etwa 0,05) der Entscheidungswert verbessert werden. Wenn die Übereinstimmung nicht zufrieden stellend ausfällt (z. B. 0,4 ergibt), so kann ein kleiner Betrag (z. B. 0,05) abgezogen werden. Damit ist eine Korrekturmöglichkeit vorhanden, falls eine Fehlentscheidung in einem Schritt erfolgt ist.

Für die Entdeckung von Vogelschwärmen werden Texturuntersuchungen durchgeführt und es wird nach Eigenschaften gesucht, die mehrere kleinere, verhältnismäßig homogene Objekte beschreiben, die sehr ähnlich sind. Für jedes solche Objekt (Vogel) gibt es einen starken Sprung der Textur an den Randbereichen. Die einzelnen Objekte zeigen ein besonderes Verhalten bezüglich der kurzzeitigen Veränderung in ihrer gegenseitigen Lage untereinander. Die Abstände der einzelnen Objekte zueinander verändern sich zeitlich stark, während die Gesamtheit sich verhältnismäßig gleichförmig bewegt.

Aus den Eigenschaften:

a) kleine Objekte (starte Texturunterschiede am Rand)
b) viele Objekte (viele Objekte mit gleichartiger Textur)
c) gegeneinander stark bewegte Objekte (zeitliche Bildfolgen zeigen starke Unterschiede)

lassen sich Vogelschwärme von Wolken und Flugzeugen unterscheiden. Diese Eigenschaften werden nach dem Prinzip der Zusammenfassung von Eigenschaften fusioniert und über den Vergleich mit einer Schwelle, z. B. 0,5 wird eine Entscheidung getroffen.

Wirbelschleppen lassen sich wie folgt auffinden:

Die Wirbelschleppen entstehen hinter startenden und landenden Flugzeugen, so dass der Ort der Suche schon sehr eingeschränkt ist. Die Untersuchungen basieren auf einer Texturanalyse am Ende eines Flugzeuges. Da das Suchfeld sehr eingeschränkt, kann eine wesentlich intensivere Verarbeitung erfolgen, ohne die Echtzeitfähigkeit zu gefährden. Die Texturuntersuchungen werden mit einer größeren Wechselwirkung, d. h. mit einer Berücksichtigung sehr vieler Punkte für die Texturbestimmung durchgeführt. Hierbei werden mehrere Zonen der Texturen untersucht, mindestens jedoch drei. Die erste Zone unmittelbar hinter dem Flugzeug weist starke aber sehr kurz reichende Veränderungen der Textur auf. Ein weiterer Bereich mit einer starken und weitreichenden Textur wird nach der oben beschriebenen Beziehungen der elementaren Texturen $Textur_{i,j}$ mit einer großen Anzahl von n ausgewertet. In einer dritten Zone ist die Anzahl n noch größer und die kurzreichenden Wechselwirkungen in der Textur sind nahezu nicht vorhanden.

Sofern in allen drei Zonen entsprechende Strukturen auffindbar sind, kann für eine Wirbelschleppe entschieden werden. Dabei sind dann alle drei Bereiche der Wirbelschleppe zugehörig.

**Patentansprüche**

1. Flugverkehr-Leiteinrichtung (1) zur Kontrolle und Steuerung des Flugverkehrs im Flughafenbereich mit einer Mehrzahl von auf zugeordnete Bereiche des Flughafens ausrichtbare Beobachtungskameras (2), mit einer Videoprojektionseinrichtung (9) in einer Leitzentrale (8) zur Darstellung von mit den Beobachtungskameras (2) erfassten Informationen als Videopanorama und mit einer Bildauswerteeinheit (5) zur automatischen Erkennung von Objekten und Extraktion von den Flugverkehr betreffenden objekt- und positionsbezogenen Verkehrsparametern aus den mit den Beobachtungskameras (2) aufgenommenen Bilddaten,
**gekennzeichnet durch**

   - mindestens eine Videokompressionseinheit (4) zur Komprimierung der von den Beobachtungskameras (2) aufgenommenen Bilddaten,
   - mindestens einen Signalteiler (3) zwischen den Beobachtungskameras (2) und der mindestens einen Videokompressionseinheit (4) sowie der Bildauswerteeinheit (5), um Verkehrsparameter aus den unkomprimierten Bilddaten zu extrahieren und diese Bilddaten annähernd gleichzeitig zu komprimieren, und
   - eine Datenübertragungsleitung (7) zwischen der entfernt von der Bildauswerteeinheit (5) und der Videokompressionseinheit (4) angeordneten Videoprojektionseinrichtung (9) und der Bildauswerte- und Videokompressionseinheit (5, 4), um die komprimierten Bilddaten und die extrahierten Verkehrsparameter zur Videoprojektionseinrichtung (9) zu übertragen.

2. Flugverkehr-Leiteinrichtung (1) nach Anspruch 1, **dadurch gekennzeichnet, dass** die Flugverkehr-Leiteinrichtung (1) Datenspeicher (11) zur Speicherung von Grafikinformationen statischer Merkmale des Flughafenbereichs und/ oder Flugverkehrsdaten hat und zur Einblendung ausgewählter Informationen in das mit der Videoprojektionseinrichtung (9) generierte Videopanorama mit Bilddaten und zugeordneten Verkehrsparametern eingerichtet ist.

3. Flugverkehr-Leiteinrichtung (1) nach Anspruch 1 oder 2, **dadurch gekennzeichnet, dass** die Bildauswerteeinheit (5) zur Bestimmung der Ortsposition von Verkehrsparametern in Abhängigkeit von der jeweiligen Bildpixelposition erkannter Objekte in den als Bildpixelmatrix aufgenommen Bildern und der Ausrichtung der jeweiligen Beobachtungskamera (2) eingerichtet ist.

4. Flugverkehr-Leiteinrichtung (1) nach einem der vorhergehenden Ansprüche, **dadurch gekennzeichnet, dass** die Videoprojektionseinrichtung (9) zur Generierung einer Draufsicht auf den Flughafenbereich und Darstellung von positionsbezogenen Verkehrsparametern durch Umrechnung der Ortsposition der Verkehrsparameter auf das Koordinatensystem der Draufsicht eingerichtet ist.

5. Flugverkehr-Leiteinrichtung (1) nach einem der vorhergehenden Ansprüche, **gekennzeichnet durch** eine Datenfunkempfangseinheit (14) zum Empfangen von Positionsdaten der in Luftfahrzeugen selbst oder mittels Radar oder Multilaterationssystem vom Boden aus bestimmten Ortsposition der Luftfahrzeuge, wobei die Flugverkehr-Leiteinrichtung (1) zur Zuordnung der empfangenen Ortspositionen zu den zugehörigen Verkehrsparametern eingerichtet ist.

6. Flugverkehr-Leiteinrichtung (1) nach einem der vorhergehenden Ansprüche, **dadurch gekennzeichnet, dass** mindestens eine der Beobachtungskameras (2) eine von der Leitzentrale (8) aus fernsteuerbare Zoomkamera mit Schwenkeinrichtung ist, um den Beobachtungsbereich und die Bildvergrößerung wahlweise zu verändern.

7. Flugverkehr-Leiteinrichtung (1) nach Anspruch 6, **dadurch gekennzeichnet, dass** die Flugverkehr-Leiteinrichtung (1) zur automatischen Nachführung der Zoomkamera in Abhängigkeit der Ortspositionen auswählbarer Verkehrsparameter durch Ansteuerung der Schwenkeinrichtung eingerichtet ist.

8. Flugverkehr-Leiteinrichtung (1) nach einem der vorhergehenden Ansprüche, **dadurch gekennzeichnet, dass** mindestens eine mit einer Schwenkeinrichtung verschwenkbare höchstauflösende Zeilenkamera (Panoramakamera) als Beobachtungskamera (2) zur Aufnahme annähernd statischer Bildinformationen vorgesehen und so ansteuerbar ist, dass in aufeinander folgenden Zeitintervallen Bilddaten unterschiedlicher Flughafenbereiche mit Bezug auf die jeweilige Schwenkposition der Beobachtungskamera (2) aufgenommen werden.

9. Flugverkehr-Leiteinrichtung (1) nach einem der vorhergehenden Ansprüche, **dadurch gekennzeichnet, dass** die Videoprojektionseinheit (9) zur Einblendung vergrößerter Darstellungen von Objekten in das generierte Videopanorama mit aufgenommenen Bilddaten und zugeordneten Verkehrsparametern eingerichtet ist, wobei die örtliche Zuordnung der vergrößert dargestellten Objekte zu der generierten Darstellung mit Hilfe einer Positionsbestimmung durch die Bildauswerteeinheit (5) und/oder mit Hilfe von an die Flugverkehr-Leiteinrichtung (1) von Luftfahrzeugen übertragenen Ortspositionen der Luftfahrzeuge erfolgt und / oder mit Hilfe einer Positionsbestimmung durch Multilaterationssystem oder Radar.

10. Flugverkehr-Leiteinrichtung (1) nach einem der vorhergehenden Ansprüche, **dadurch gekennzeichnet, dass** die Videoprojektionseinrichtung (9) zur kohärenten Überlagerung des Videopanoramas mit Geländedaten des Flughafens, insbesondere Rollwegkonturen der Rollwege des Flughafens, mit Flugverkehrsdaten, Anflugradardaten und/ oder Wetterdaten eingerichtet ist.

11. Flugverkehr-Leiteinrichtung (1) nach einem der vorhergehenden Ansprüche, **dadurch gekennzeichnet, dass** die Videoprojektionseinheit (9) zum automatischen Ein- und Ausblenden von Bilddaten und Verkehrsparametern in dem Videopanorama in Abhängigkeit von mindestens der Bewegung und Textur erkannter Objekte eingerichtet ist.

12. Flugverkehr-Leiteinrichtung (1) nach einem der vorhergehenden Ansprüche, **dadurch gekennzeichnet, dass** die Bildauswerteeinheit (5) zur Extraktion von Objekttypen, Objektzuständen, Objektpositionen und/oder Objektgeschwindigkeiten als Verkehrsparameter durch Echtzeit-Bildverarbeitungsverfahren eingerichtet ist.

13. Flugverkehr-Leiteinrichtung (1) nach einem der vorhergehenden Ansprüche mit Zwischenspeicher für Bilddaten und Verkehrsparameter, **dadurch gekennzeichnet, dass** die Videoprojektionseinheit (9) zum selektiven, zeitversetzten Darstellen von im Zwischenspeicher abgelegten Sequenzen von Bilddaten und/oder Verkehrsparametern eingerichtet ist, während die aktuellen Bilddaten und Verkehrsparameter in dem Zwischenspeicher gepuffert werden.

14. Flugverkehr-Leiteinrichtung (1) nach Anspruch 13, **dadurch gekennzeichnet, dass** die Videoprojektionseinheit (9) zur Darstellung der im Zwischenspeicher abgelegten Sequenzen von Bilddaten und/oder Verkehrsparametern im Zeitraffer eingerichtet ist.

## Claims

1. Air traffic guidance device (1) for monitoring and controlling the air traffic in the airport area having a plurality of observation cameras (2) which can be aligned with associated areas of the airport, having a video projection device (9) in a control centre (8) for displaying information recorded by the observation cameras (2) as a video panorama, and having an image evaluation unit (5) for automatic identification of objects and extraction of object-related and position-related traffic parameters which relate to the air traffic from image data recorded by the observation cameras (2),
**characterized by**

   - at least one video compression unit (4) for compression of the image data recorded by the observation cameras (2),
   - at least one signal divider (3) between the observation cameras (2) and the at least one video compression unit (4) and the image evaluation unit (5), in order to extract traffic parameters from the uncompressed image data and to compress this image data approximately at the same time, and
   - a data transmission line (7) between the video projection device (9), which is arranged remotely from the image evaluation unit (5) and the video compression unit (4), and the image evaluation and video compression unit (5, 4), in order to transmit the compressed image data and the extracted traffic parameters to the video projection device (9).

2. Air traffic guidance device (1) according to Claim 1, **characterized in that** the air traffic guidance device (1) has a data memory (11) for storage of graphics information of static features in the airport area and/or air traffic data and is designed to overlay selected information on the video parameter generated by the video projection device (9), with image data and associated traffic parameters.

3. Air traffic guidance device (1) according to Claim 1 or 2, **characterized in that** the image evaluation unit (5) is used to determine the local position of traffic parameters as a function of the respective image pixel position of identified objects in the images recorded as an image pixel matrix, and as a function of the alignment of the respective observation camera (2).

4. Air traffic guidance device (1) according to one of the preceding claims, **characterized in that** the video projection device (9) is designed to generate a plan view of the airport area and to display position-related traffic parameters by conversion of the local position of the traffic parameters to the coordinate system of the plan view.

5. Air traffic guidance device (1) according to one of the preceding claims, **characterized by** a data radio receiving unit (14) for reception of position data obtained in the aircraft themselves or by means of radar or multilateration system from the ground from a specific local position of the aircraft, with the air traffic guidance device (1) being designed to associate the received local positions with the associated traffic parameters.

6. Air traffic guidance device (1) according to one of the preceding claims, **characterized in that** at least one of the observation cameras (2) is a zoom camera which can be controlled remotely from the control centre (8) and has a scanning device, in order to selectively vary the observation area and the image magnification.

7. Air traffic guidance device (1) according to Claim 6, **characterized in that** the air traffic guidance device (1) is designed for automatic readjustment of the zoom camera as a function of the local positions of selectable traffic parameters, by operation of the scanning device.

8. Air traffic guidance device (1) according to one of the preceding claims, **characterized in that** at least one very high resolution line camera (panorama camera) which can be scanned by means of a scanning device is provided as an observation camera (2) for recording approximately static image information and can be operated such that image data on different airport areas is recorded in successive time intervals with reference to the respective scan position of the observation camera (2).

9. Air traffic guidance device (1) according to one of the preceding claims, **characterized in that** the video projection unit (9) is designed to overlay magnified illustrations of objects into the generated video panorama with recorded image data and associated traffic parameters, with the local association of the objects displayed in a magnified fashion to the generated display being produced with the aid of position-finding by the image evaluation unit (5) and/or with the aid of local positions of the aircraft transmitted to the air traffic guidance device (1) from the aircraft, and/or with the aid of position-finding by a multilateration system or radar.

10. Air traffic guidance device (1) according to one of the preceding claims, **characterized in that** the video projection device (9) is designed for coherent overlaying of the video panorama with terrain data of the airport, in particular taxiway contours of the taxiways at the airport, with air traffic data, approach radar data and/or weather data.

11. Air traffic guidance device (1) according to one of the preceding claims, **characterized in that** the video projection unit (9) is designed for automatic overlaying and masking out of image data and traffic parameters in the video panorama as a function of at least the movement and texture of identified objects.

12. Air traffic guidance device (1) according to one of the preceding claims, **characterized in that** the image evaluation unit (5) is designed for extraction of object types, object states, object positions and/or object speeds as traffic parameters by real-time image processing methods.

13. Air traffic guidance device (1) according to one of the preceding claims with a buffer store for image data and traffic parameters, **characterized in that** the video projection unit (9) is designed for selective, time-offset display of sequences, stored in the buffer store, of image data and/or traffic parameters, while the current image data and traffic parameters are buffered in the buffer store.

14. Air traffic guidance device (1) according to Claim 13, **characterized in that** the video projection unit (9) is designed to display the sequences of image data and/or traffic parameters stored in the buffer store, in the form of a quick-motion display.

**Revendications**

1. Dispositif de gestion du trafic aérien (1) pour contrôler et commander le trafic aérien dans une zone d'aéroport, comprenant des caméras de surveillance (2) orientables vers les régions associées de l'aéroport, un dispositif de projection vidéo (9) dans une centrale de gestion (8) pour représenter sous la forme d'un panorama vidéo des informations saisies par les caméras de surveillance (2), et une unité d'exploitation d'image (5) pour la reconnaissance automatique d'objets et l'extraction de paramètres de trafic relatifs à l'objet et à la position et concernant le trafic aérien, à partir des données d'image enregistrées avec les caméras de surveillance (2),
   **caractérisé par**

   - au moins une unité de compression vidéo (4) pour comprimer les données d'image enregistrées par les caméras de surveillance (2),
   - au moins un répartiteur de signal (3) entre les caméras de surveillance (2) et l'au moins une unité de compression vidéo (4) ainsi que l'unité d'exploitation d'image (5), pour extraire les paramètres de trafic issus des données non comprimées d'image et pour comprimer ces données d'image pratiquement simultanément, et
   - une ligne de transmission des données (7) entre le dispositif de projection vidéo (9), agencé à distance de l'unité d'exploitation d'image (5) et de l'unité de compression vidéo (4), et l'unité d'exploitation d'image et de compression vidéo (4, 5), pour transmettre au dispositif de projection vidéo (9) les données d'image comprimées et les paramètres de trafic extraits.

2. Dispositif de gestion du trafic aérien (1) selon la revendication 1, **caractérisé en ce que** le dispositif de gestion du trafic aérien (1) a des mémoires de données (11) pour la mémorisation d'informations graphiques sur des caractéristiques statistiques de la zone d'aéroport et/ou des données de trafic aérien, et est configuré pour insérer à l'écran des informations sélectionnées avec des données d'image et des paramètres de trafic associés dans le panorama vidéo généré avec le dispositif de projection vidéo (9).

3. Dispositif de gestion du trafic aérien (1) selon la revendication 1 ou 2, **caractérisé en ce que** l'unité d'exploitation d'image (5) est configurée pour la détermination de la position locale de paramètres de trafic en fonction de la position respective des pixels de l'image d'objets reconnus dans les images enregistrées en tant que matrice de pixels d'image, et la détermination de l'orientation de chaque caméra de surveillance (2).

**4.** Dispositif de gestion du trafic aérien (1) selon l'une des revendications précédentes, **caractérisé en ce que** le dispositif de projection vidéo (9) est configuré pour la génération d'une vue de dessus montrant la zone d'aéroport et pour la représentation de paramètres de trafic relatifs à la position, en convertissant dans le système de coordonnées de la vue de dessus la position locale des paramètres de trafic.

**5.** Dispositif de gestion du trafic aérien (1) selon l'une des revendications précédentes, **caractérisé par** une unité de réception radio des données (14) pour la réception de données de position des positions locales des avions déterminées dans l'avion lui-même ou depuis le sol, par radar ou système de multilatération, dans lequel le dispositif de gestion du trafic aérien (1) est configuré pour l'attribution des positions locales reçues aux paramètres de trafic correspondants.

**6.** Dispositif de gestion du trafic aérien (1) selon l'une des revendications précédentes, **caractérisé en ce que** l'une au moins des caméras de surveillance (2) est une caméra à zoom à système de pivotement qui peut être télécommandée depuis la centrale de gestion (8), pour changer à sa guise la zone de surveillance et l'agrandissement de l'image.

**7.** Dispositif de gestion du trafic aérien (1) selon la revendication 6, **caractérisé en ce que** le dispositif de gestion du trafic aérien (1) est configuré pour l'ajustement automatique de la caméra à zoom en fonction de la position locale de paramètres de trafic que l'on peut choisir, grâce à la commande du dispositif de pivotement.

**8.** Dispositif de gestion du trafic aérien (1) selon l'une des revendications précédentes, **caractérisé en ce qu'**au moins une caméra à capteur unidimensionnel (caméra panoramique) à très haute résolution, pouvant pivoter, grâce à un dispositif de pivotement, est prévue en tant que caméra de surveillance (2) pour l'enregistrement d'informations sur une image, approximativement statistiques, et est commandable de telle façon que dans des intervalles de temps successifs, des données d'image de différentes zones d'aéroport sont enregistrées en fonction de chacune des positions de pivotement de la caméra de surveillance (2).

**9.** Dispositif de gestion du trafic aérien (1) selon l'une des revendications précédentes, **caractérisé en ce que** l'unité de projection vidéo (9) est configurée pour insérer à l'écran des représentations agrandies d'objets dans le panorama vidéo généré avec les données d'image enregistrées et les paramètres de trafic associés, dans lequel l'association positionnelle des objets agrandis avec la représentation générée s'effectue à l'aide d'une détermination de la position de l'avion grâce à l'unité d'exploitation d'image (5) et/ou à l'aide de positions locales transmises au dispositif de gestion du trafic aérien (1) par des avions et/ou à l'aide d'une détermination de position par système de multilatération ou radar.

**10.** Dispositif de gestion du trafic aérien (1) selon l'une des revendications précédentes, **caractérisé en ce que** le dispositif de projection vidéo (9) est configuré pour la superposition cohérente du panorama vidéo avec des données de terrain de l'aéroport, en particulier des contours des pistes de l'aéroport, avec des données de trafic aérien, des données de radar d'approche, et/ou des données météorologiques.

**11.** Dispositif de gestion du trafic aérien (1) selon l'une des revendications précédentes, **caractérisé en ce que** l'unité de projection vidéo (9) est configurée pour insérer à ou enlever de l'écran des données d'image et des paramètres de trafic dans le panorama vidéo en fonction au moins du mouvement et de la texture d'objets reconnus.

**12.** Dispositif de gestion du trafic aérien (1) selon l'une des revendications précédentes, **caractérisé en ce que** l'unité d'exploitation d'image (5) est configurée pour extraire des types, d'objet, des états d'objet, et/ou des vitesses d'objet, en tant que paramètres de trafic, grâce à un procédé de traitement d'image en temps réel.

**13.** Dispositif de gestion du trafic aérien (1) selon l'une des revendications précédentes comprenant une mémoire intermédiaire pour des données d'image et des paramètres de trafic, **caractérisé en ce que** l'unité de projection vidéo (9) est configurée pour la représentation sélective décalée dans le temps de paramètres de trafic et/ou de séquences de données d'image stockées dans la mémoire intermédiaire, tandis que les données d'image et paramètres de trafic actuels sont mis en mémoire tampon dans la mémoire intermédiaire.

**14.** Dispositif de gestion du trafic aérien (1) selon la revendication 13, **caractérisé en ce que** l'unité de projection vidéo (9) est configurée pour la représentation accélérée des paramètres de trafic et/ou des séquences de données d'image stockées dans la mémoire intermédiaire.

Fig. 1

Fig. 2

Fig. 3

16a  16b  16c  16d

15a

Anflugzoom

Horizontlinie

Panorama

Draufsicht

lokales
Video

Touch –
Input
Device

15b

16e  16f  16g  16h

Fig. 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **NORBERT FÜRSTENAU ; MICHAEL RUDOLPH ; MARKUS SCHMIDT ; BERND WERTHER.** Virtual Tower. *DLR-Sonderheft: Wettbewerb der Visionen,* 2004, 16-21

- Perspectives of Virtual Reality for Integration. **NORBERT FÜRSTENAU.** Proceedings 12th Scientific Seminar DLR. Institute of Flight Guidance, Oktober 2002